# EUROPEAN PATENT APPLICATION

(11) **EP 3 160 105 A1**
(43) Date of publication of application: **26.04.2017**
(21) Application number: 16159949.3
(22) Date of filing: 11.03.2016
(51) Int. Cl.: H04L 29/06, H04L 29/08

(54) **METHOD AND DEVICE FOR PUSHING INFORMATION**

(30) Priority: 23.10.2015 CN 201510698403
(71) Applicant: Xiaomi Inc., Beijing 100085 (CN)
(72) Inventor: JI, Xinhua, Beijing 100085 (CN); LI, Haifeng, Beijing 100085 (CN); CHEN, Zhijun, Beijing 100085 (CN)
(74) Representative: Delumeau, François Guy

(57) **Abstract**

Method, device, apparatus and system for pushing information are provided in the disclosure. The method may include: acquiring (101) target information stored locally in a terminal; determining (102) an interest parameter based on the target information; transmitting (103) to the terminal push information corresponding to the interest parameter. Information push may be practiced based on the interest parameter determined by the present disclosure.

## Description

### FIELD

The present disclosure generally relates to mobile communication, and more particularly to method, apparatus, device and system for pushing information.

### BACKGROUND

Users of mobile terminals can now receive a wide variety of push information such as push advertisements. In related arts for pushing information, user information is generally acquired first and information are pushed based on the acquired user information. Sources of user information can typically fall into three types, that is, text information, user behavior information and image information. Text information may include user account information and information of resources accessed by users; user behavior information may include browsing behaviors, downloading behaviors, operating time and the like; image information may include pictures taken by users.

In related art, text information and user behavior information are mainly utilized for analyzing user information to push information. Image information is utilized in some methods, however, only limited information such as the time when the picture was taken, geographical information and basic parameter information of a image capture device is acquired through Exchangeable Image File (EXIF) information.

### SUMMARY

Method, device, apparatus and system for pushing information are provided in the disclosure. Information push may be practiced based on an interest parameter determined by the present disclosure.

According to a first aspect of the present disclosure, a method for pushing information is provided, including: acquiring locally stored target information; determining an interest parameter based on the target information; transmitting to a server the interest parameter, so that the server is operable to acquire push information corresponding to the interest parameter; and receiving the push information transmitted by the server.

Alternatively, the processing of acquiring locally stored target information may include: acquiring the locally stored target information via a Storm real-time streaming distribution processing framework.

Alternatively, the processing of acquiring locally stored target information may include: acquiring one or more of image history operating information, text history operating information, audio history operating information, and video history operating information, which are stored locally.

Alternatively, the processing of determining an interest parameter based on the target information may include: performing duplicate removal on the target information; determining the interest parameter based on the duplicate-removed target information.

According to a second aspect of the present disclosure, a method for pushing information is provided, including: acquiring target information stored locally in a terminal; determining an interest parameter based on the target information; and transmitting to the terminal the push information corresponding to the interest parameter.

Alternatively, the processing of acquiring target information stored locally in a terminal may include: acquiring the target information stored locally in the terminal via a Storm real-time streaming distribution processing framework.

Alternatively, the processing of acquiring target information stored locally in a terminal may include: acquiring one or more of image history operating information, text history operating information, audio history operating information, and video history operating information stored locally in the terminal.

Alternatively, the processing of determining an interest parameter based on the target information may include: performing duplicate removal on the target information; determining the interest parameter based on the duplicate-removed target information.

Alternatively, the processing of transmitting to the terminal push information corresponding to the interest parameter may include: transmitting to the terminal one or more of an advertisement, an application recommendation, and a notification that correspond to the interest parameter.

Alternatively, the processing of acquiring target information stored locally in a terminal may include: acquiring current target information and history target information stored locally in the terminal.

According to a third aspect of embodiments of the present disclosure, a device for pushing information is provided, including: an information acquisition module configured to acquire locally stored target information; an interest parameter determination module configured to determine an interest parameter based on the target information acquired by the information acquisition module; an interest parameter transmission module configured to transmit to a server the interest parameter determined by the interest parameter determination module, so that push information corresponding to the interest parameter is acquired by the server; and an information reception module configured to receive the push information transmitted by the server.

Alternatively, the device may further include: a framework setup module configured to set up a Storm real-time streaming distribution processing framework, wherein the information acquisition module acquires the locally stored target information via the Storm real-time streaming distribution processing framework which is set up by the framework setup module.

Alternatively, the information acquisition module may further include: a storage sub-module configured to locally store image history operating information, text history operating information, audio history operating information, and video history operating information; and an acquisition sub-module configured to acquire one or more of the image history operating information, text history operating information, audio history operating information, and video history operating information stored locally in the storage sub-module.

Alternatively, the interest parameter determination module may further include: a duplicate removal sub-module configured to perform duplicate removal on the target information; and an interest parameter sub-module configured to determine an interest parameter based on the duplicate-removed target information.

According to a fourth aspect of embodiments of the present disclosure, a device for pushing information is provided, including: an information acquisition module configured to acquire target information stored locally in a terminal; an interest parameter determination module configured to determine an interest parameter based on the target information acquired by the information acquisition module; and an information push module configured to transmit to the terminal push information corresponding to the interest parameter determined by the interest parameter determination module.

Alternatively, the device may further include: a framework setup module configured to set up a Storm real-time streaming distribution processing framework, wherein the information acquisition module acquires the target information stored locally in the terminal via the Storm real-time streaming distribution processing framework which is set up by the framework setup module.

Alternatively, the interest parameter determination module may further include: a duplicate removal sub-module configured to perform duplicate removal on the target information; and an interest parameter sub-module configured to determine the interest parameter based on the duplicate-removed target information.

Alternatively, the information push module may further include: a storage sub-module configured to store an advertisement, an application recommendation, and a notification corresponding to the interest parameter; and a push sub-module configured to transmit to the terminal one or more of the advertisement, the application recommendation, and the notification that correspond to the interest parameter and are stored in the storage sub-module.

According to a fifth aspect of embodiments of the present disclosure, an apparatus for pushing information is provided, including: a processor; a memory for storing processor-executable instructions; wherein the processor is configured to: acquire locally stored target information; determine an interest parameter based on the target information; transmit the interest parameter to a server, so that the server is operable to acquire push information corresponding to the interest parameter; and receive the push information transmitted by the server.

According to a sixth aspect of embodiments of the present disclosure, an apparatus for pushing information is provided, including: a processor; a memory for storing processor-executable instructions; wherein the processor is configured to: acquire target information stored locally in a terminal; determine an interest parameter based on the target information; and transmit to a terminal push information corresponding to the interest parameter.

According to a seventh aspect of embodiments of the present disclosure, a system for pushing information is provided, including: a server configured to: acquire target information stored locally in a terminal, determine an interest parameter based on the target information, and transmit to the terminal push information corresponding to the interest parameter; and a terminal configured to: store the target information, and receive the push information that corresponds to the interest parameter transmitted by the server.

According to a eighth aspect of embodiments of the present disclosure, a device for pushing information is provided, including: a terminal configured to: acquire locally stored target information, determine an interest parameter based on the target information, transmit the interest parameter to a server, and receive push information transmitted by the server; and a server configured to: receive the interest parameter transmitted by the terminal, acquire the push information corresponding to the interest parameter based on the interest parameter, and transmit the push information to the terminal.

The advantages and features of the devices according to the embodiments of the present disclosure are the same with those of the above described method and will not be repeated here.

Alternatively, the steps of the method for pushing information are determined by computer program instructions.

Consequently, according to a ninth aspect, the invention is also directed to a computer program for executing the steps of the method for pushing information as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the disclosure may provide at least some of the following beneficial effects:
In the present disclosure, an interest parameter may be determined based on target information stored locally in a terminal, and push information that correspond to the interest parameter may be transmitted to the terminal according to the interest parameter determined based on the target information, which is stored locally in the terminal, thereby accuracy and comprehensiveness may be improved with respect to acquiring interest of a user, information may be pushed based on the more accurate and comprehensive user interest, thereby user demands may be better satisfied.
In the disclosure, Storm real-time streaming distribution processing framework is employed in the disclosure, which is more suitable for real-time processing compared with the commonly used distribution processing framework such as hadoop
In the disclosure, a wide variety of target information may be acquired, which may include, but not limited to, one or more of image history operating information, text history operating information, audio history operating information, and video history operating information stored locally in a terminal.
In the disclosure, duplicate removal on target information may be performed, which may lead to reduced amount of information to be processed, so that computational complexity may be reduced and processing speed may be improved.
In the disclosure, various information may be pushed, which may include, but not limited to, one or more of an advertisement, an application recommendation, and a notification that corresponds to the interest parameter.

The disclosure may perform a cluster correlation analysis based on current target information and history target information, so as to more accurately determine the interest parameter of a user and track changes of the interest parameter.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for pushing information according to an exemplary embodiment.
Fig. 2 is a flow diagram illustrating another method for pushing information according to an exemplary embodiment.
Fig. 3 is a flow diagram illustrating another method for pushing information according to an exemplary embodiment.
Fig. 4 is a flow diagram illustrating another method for pushing information according to an exemplary embodiment.
Fig. 5 is a block diagram illustrating a device for pushing information according to an exemplary embodiment.
Fig. 6 is a block diagram illustrating another device for pushing information according to an exemplary embodiment.
Fig. 7 is a block diagram illustrating another device for pushing information according to an exemplary embodiment.
Fig. 8 is a block diagram illustrating another device for pushing information according to an exemplary embodiment.
Fig. 9 is a block diagram illustrating a device according to an exemplary embodiment.
Fig. 10 is a block diagram illustrating a device according to an exemplary embodiment.
Fig. 11 is a structure block diagram illustrating a device according to an exemplary embodiment.
Fig. 12 is a system block diagram illustrating a device according to an exemplary embodiment.
Fig. 13 is a system block diagram illustrating a device according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

The terms used in present disclosure are merely for describing the particular embodiments rather than limiting the present disclosure. Terms, such as "a", "an", "said", and "the", as used in singular form in present disclosure and appended claims include plural form, unless otherwise represent other meaning clearly in the context. It also should be understood that the term "and/or" used herein indicates and comprises any or all of possible combinations of one or more associated items which have been listed.

It should be understood that the terms "first," "second," and "third," may be used to describe various information, but it not limit to these terms. These terms are only used to separate the same type of the information from each other. For example, the first information may also be referred as the second information without departing from the scope of the present disclosure, similarly the second information may also be referred to as the first information. The word "if" as used herein may be interpreted as "when" or "while" or "respond to determination" depending on the context.

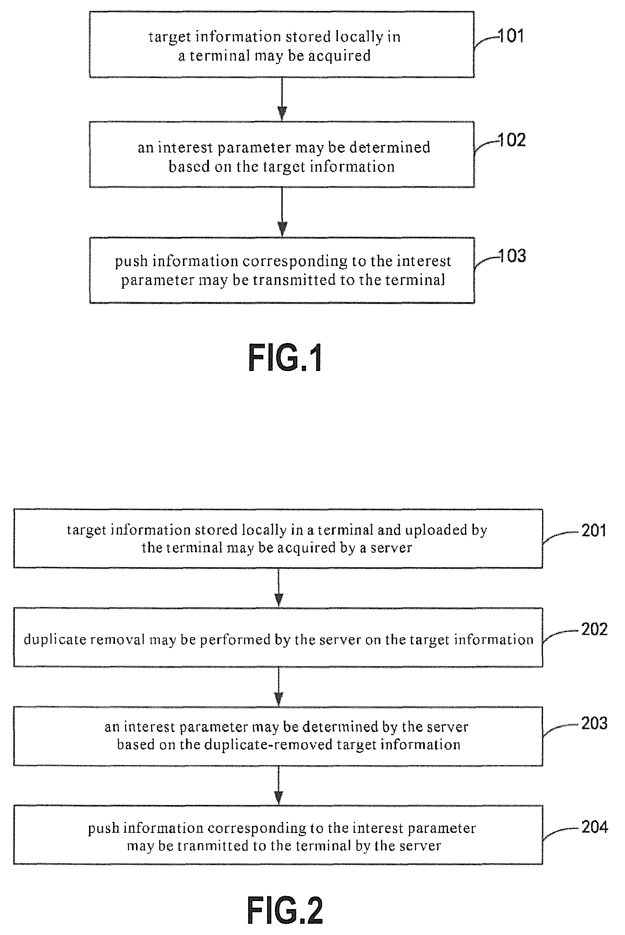

Fig. 1 is a flow diagram illustrating a method for pushing information according to an exemplary embodiment.

The method may apply to a server, as illustrated in Fig. 1, and include the following steps.

In step 101, target information stored locally in a terminal may be acquired.

The processing of acquiring target information stored locally in a terminal may include acquiring history operating information of an image, a text, an audio, and a video stored locally in the terminal.

The processing of acquiring target information stored locally in a terminal may include acquiring current target information and history target information stored locally in the terminal.

In step 102, an interest parameter is determined based on the target information.

Current interests and hobbies of a user may be learned by acquiring the target information, which is an indication of the user's interests and hobbies, stored locally in the terminal, therefore the interest parameter of the user may be determined.

For example, it can be inferred that the user may have a demand for child services based on the acquired images that are stored locally in the terminal, and the interest parameter of the user may be determined.

In step 103, push information corresponding to the interest parameter may be transmitted to the terminal.

In this step, the server may transmit to the mobile terminal push information, which may include, but not limited to, one or more of an advertisement, an application recommendation, and a notification that corresponds to the interest parameter.

It can be seen from the embodiment that the interest parameter may be determined based on target information stored locally in a terminal, and push information that correspond to the interest parameter may be transmitted to the terminal according to the interest parameter determined based on the target information, which is stored locally in the terminal, thereby accuracy and comprehensiveness may be improved with respect to acquiring interest of a user, information may be pushed based on the more accurate and comprehensive user interest, thereby user demands may be better satisfied.

Fig. 2 is a flow diagram illustrating another method for pushing information according to an exemplary embodiment.

The method may apply to a server. Technical solutions proposed in the disclosure will be described with more details with respect to Fig. 1.

As illustrated in Fig. 2, the method may include the following steps.

In step 201, target information stored locally in a terminal and uploaded by the terminal may be acquired by a server.

In the terminal of the embodiment, target information that may include, but not limited to, one or more of image history operating information, text history operating information, audio history operating information, and video history operating information may be stored locally in the terminal. The target information stored locally in the terminal may be uploaded to the server by the terminal and the target information may be received by the server for analysis. In view of an overloaded CPU and excessive power consumption of the terminal in the case that analytical processing of the target information, especially images, is performed in the terminal, the target information may be uploaded by the terminal to the server for analytical processing.

In this step, target information stored locally in a terminal and uploaded by the terminal may be acquired by a server through Storm real-time streaming distribution processing framework.

Storm rather than other distribution frameworks such as hadoop is utilized in the disclosure. Hadoop has been widely used in massive data processing due to its high throughput, automated fault tolerance, etc.. However, hadoop, which is good at batch processing, is not good at real-time calculation. Storm is an open source streaming distribution processing framework that has strong capability for real-time processing. Application scenarios of Storm may include stream data processing. Storm may be used to process a steady stream of incoming messages and write the processing results into a storage device. Therefore, in consideration of the amount of the target information, particularly images, and the requirement for real-time processing, especially when the size of the images reaches a P level (P is storage capacity unit), Storm streaming processing is utilized in the server for analytical processing, so that a large amount of images could be processed in a real-time manner. It should be noted that the present disclosure is illustrated with respect to Storm real-time streaming distribution processing framework but is not limited to this, other real-time distribution framework that has strong processing capabilities may be utilized too.

The processing of acquiring target information stored locally in a terminal may include acquiring current target information and history target information stored locally in the terminal.

In step 202, duplicate removal may be performed by the server.

The duplicate removal may be performed by the server to reduce the amount of information to be processed, so that computational complexity may be reduced and processing speed may be improved.

The duplicate removal of the embodiment may include removing duplicate contents based on topics of the images , for example, removing the same images or images of little differences.

In step 203, an interest parameter may be determined by the server based on the duplicate-removed target information.

When the target information is text information, the interest parameter may be determined based on user account information and information of resources accessed by the user that contained in the text information.

When the target information is a video, the interest parameter may be determined based on a title, content and viewing time of the video.

When the target information is an audio, the interest parameter may be determined based on image recognition such as facial recognition and object recognition, so as to extract information such as gender, age, mood, family members, hobbies, income level and other information of the user and determine the interest parameter based on the extracted information.

For example, it can be determined that the user is interested in outdoor activity if a traveling related video has been recently view by the user.

As another example, it can be determined that the user has a demand for child training if the server recognizes the image uploaded by the user as a child participating in a certain training course.

Image recognition techniques such as face.com, Orbeus, face++, etc. provided by enterprises or deep learning facial recognition techniques may be utilized by the present disclosure. It should be noted that algorithms involved in image recognition may be adjusted with the development of the image recognition techniques. The interest parameter of a user may be determined through analyzing characteristic information by means of data mining and analysis techniques, wherein the characteristic information is acquired through image recognition. For example, one or more keywords or tag information such as time, location, object type and other information may be acquired after image recognition analysis, and the interest parameter of the user may be acquired. Therefore, with image recognition, basic information such as gender, age, mood, family members, hobbies, income level, etc. may be acquired and the interest parameter may be determined for accurate and timely push of subsequent personalized push information. Data mining and analysis techniques may include K-Miner, MPP (Massively Parallel Processing), +SMP (Symmetric Multi Processing), GDM (Geni-Sage Data Mining Analysis System) and the like.

In the case that the acquired target information includes both current target information and history target information stored locally in a terminal, the disclosure may also perform a cluster correlation analysis based on the current target information and history target information, so as to more accurately determine the interest parameter of a user and track changes of the interest parameter.

It is to be noted that the interest parameter may be stored in the server by means of cloud storage techniques after being determined. In addition, the interest parameter determined by the server may also be synchronized to respective user terminals.

In step 204, push information corresponding to the interest parameter may be tranmitted to the terminal by the server.

In this step, the server may transmit, via a push system thereof, to the mobile terminal push information, which may include, but not limited to, one or more of an advertisement, an application recommendation, and a notification that corresponds to the interest parameter.

The abovementioned procedure may be illustrated in combination with application scenarios.

For example, based on image recognition of images that have been uploaded by the mobile terminal, information such as whether the user has a child, the number of the children that the user has, the gender, age, hobbies of each child, etc. may be determined, then the income level of the family may be inferred according to the number of the children, geographic information and contents of the images, and it can be inferred based on these information that the user has a demand for child services, the interest parameter may thus be determined and product information that is related to children may be pushed to the user.

In addition, a cluster correlation analysis may be performed with respect to the latest images uploaded by a terminal. For example, it can be determined that a user has a demand for child training if a server recognizes images uploaded by the user as a child participating in a certain training course, then the interest parameter of the user may be determined to provide the user with information that is related to training information and information about devices needed by some hobbies. For example, it can be determined that an image is taken at a training institution by analyzing the image, such as analyzing a Logo and course information, etc. of a training institution in the image, and after a comprehensive analysis it will be obvious that the user intends to choose a training course for his/her child, then advertisements related to training courses may be pushed to the user. In this case, since what is pushed is what the user concerns, the push advertisement will not cause the user's antipathy and the user, the advertiser, and the vendor will all benefit from this.

It can be seen from the embodiment that target information stored locally in a terminal and uploaded by the terminal may be acquired by a server. The interest parameter may be determined based on the target information, and push information may be transmitted based on the interest parameter. If images uploaded by the terminal are acquired, by means of image recognition, basic information such as gender, age, mood, family members, hobbies, income level, etc. may be acquired and the interest parameter may be determined for accurate and timely push of subsequent personalized information such as advertisements, application recommendations and notifications, so that the needs of the user, the advertiser, and the vendor will all be satisfied.

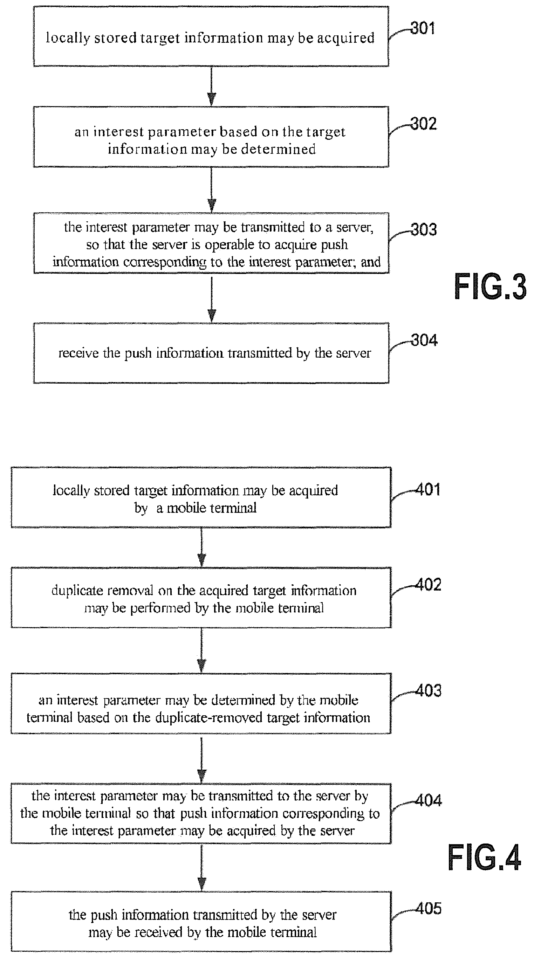

Fig. 3 is a flow diagram illustrating another method for pushing information according to an exemplary embodiment.

The method may apply to a server. It will be noted that the technical solution proposed in the present disclosure may apply to a mobile terminal in the case of an advance configuration and a large battery capacity of the mobile terminal. Compared to embodiments of Fig. 1 and Fig. 2, analytical processing for target information is performed in the mobile terminal in the method illustrated in Fig. 3.

As illustrated in Fig. 3, the method may include the following steps.

In step 301, target information stored locally in a terminal may be acquired

The processing of this step may include acquiring history operating information of an image, a text, an audio, and a video stored locally in the terminal.

The processing of this step may include acquiring current target information and history target information stored locally in the terminal.

In step 302, an interest parameter are determined based on the target information.

Current interests and hobbies of a user may be learned by acquiring the target information, which is an indication of the user's interests and hobbies, stored locally in the terminal, therefore the interest parameter of the user may be determined.

For example, it can be inferred that the user may have a demand for child services based on the acquired images that are stored locally in the terminal, and the interest parameter of the user may be determined.

In step 303, the interest parameter may be transmitted to a server so that the server may acquire push information corresponding to the interest parameter.

In this step, a mobile terminal may transmit to the server the interest parameter that have been determined, so that the server may acquire the push information corresponding to the interest parameter based on the interest parameter, wherein the push information may include, but not limited to, one or more of an advertisement, an application recommendation, and a notification that corresponds to the interest parameter.

In step 304, the push information transmitted by the server may be received.

It can be seen from the embodiment that interest parameter may be determined based on target information stored locally in a terminal, and push information may be transmitted to the server according to the interest parameter determined based on the target information, which is stored locally in the terminal, then the push information that correspond to the interest parameter may be transmitted to the terminal by the server, thereby accuracy and comprehensiveness may be improved with respect to acquiring interest of a user, information may be pushed based on the more accurate and comprehensive user interest, thereby user demands may be better satisfied.

Fig. 4 is a flow diagram illustrating another method for pushing information according to an exemplary embodiment.

The method may apply to a mobile terminal. Technical solutions proposed in the disclosure will be described with more details with respect to Fig. 3.

In step 401, target information stored locally in a mobile terminal may be acquired by the mobile terminal.

In this step, the mobile terminal may acquire target information stored locally therein, wherein the target information may include, but not limited to, one or more of image history operating information, text history operating information, audio history operating information, and video history operating information.

In this step, target information stored locally in the mobile terminal may be acquired by the mobile terminal through Storm real-time streaming distribution processing framework.

The processing of acquiring target information stored locally in the mobile terminal may include acquiring current target information and history target information stored locally in the terminal.

In step 402, duplicate removal on the acquired target information may be performed by the mobile terminal.

The duplicate removal may be performed by the mobile terminal to reduce the amount of information to be processed, so that computational complexity may be reduced and processing speed may be improved.

The duplicate removal of the embodiment may include removing duplicate contents based on topics of the images, for example, removing the same images or images of little differences.

In step 403, an interest parameter may be determined by the mobile terminal based on the duplicate-removed target information.

Step 203 may be referred to for detailed descriptions of how the interest parameter may be determined.

In step 404, the interest parameter may be transmitted to the server by the mobile terminal so that push information corresponding to the interest parameter may be acquired by the server.

In this step, the determined push information may be transmitted to the server by the mobile terminal so that the push information corresponding to the interest parameter may be acquired by the server, wherein the push information may include, but not limited to, one or more of an advertisement, an application recommendation, and a notification that corresponds to the interest parameter.

In step 405, the push information transmitted by the server may be received by the mobile terminal.

It can be seen from the embodiment that analytical processing for target information is performed in the mobile terminal. The interest parameter may be determined based on the target information which is stored locally in the mobile terminal and also acquired by the mobile terminal. The interest parameter may be transmitted to the server, so that accurate and timely push of subsequent personalized information may be pushed by the server, and the needs of the user, the advertiser, and the vendor will all be satisfied.

Corresponding to embodiments of the methods described above for pushing information, embodiments of devices for pushing information and related apparatus and systems are also provided in the disclosure.

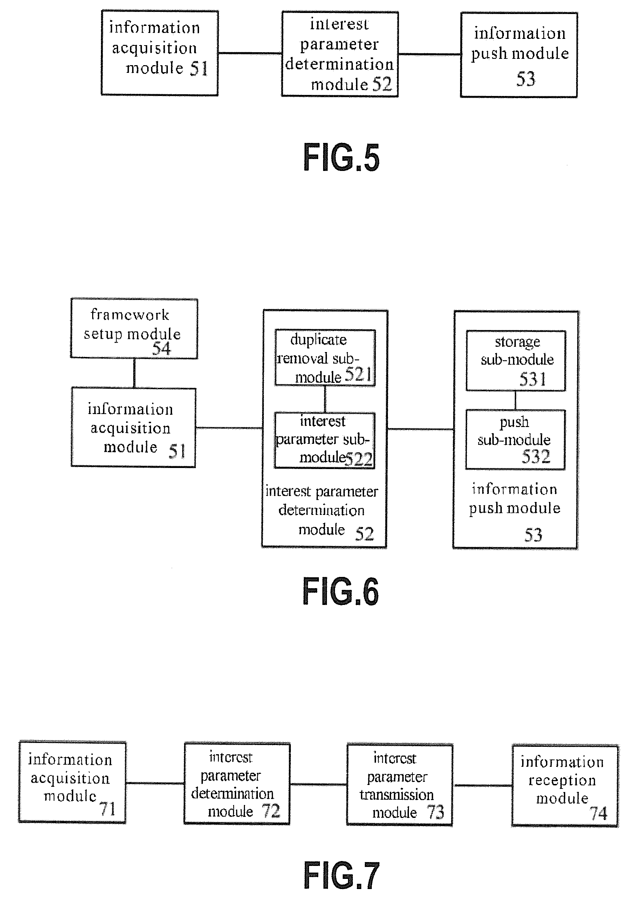

Fig. 5 is a block diagram illustrating a device for pushing information according to an exemplary embodiment.

The device may be a server. As illustrated in Fig. 5, the device for pushing information may include an information acquisition module 51, an interest parameter determination module 52, and an information push module 53.

The information acquisition module 51 is configured to acquire target information stored locally in a mobile terminal.

The interest parameter determination module 52 is configured to determine an interest parameter based on the target information acquired by the information acquisition module 51.

The information push module 53 is configured to transmit to the mobile terminal push information that correspond to the interest parameter determined by the interest parameter determination module 52.

It can be seen from the embodiment that the interest parameter may be determined based on target information stored locally in a terminal, and push information that correspond to the interest parameter may be transmitted to the terminal according to the interest parameter determined based on the target information, which is stored locally in the terminal, thereby accuracy and comprehensiveness may be improved with respect to acquiring interest of a user, information may be pushed based on the more accurate and comprehensive user interest, thereby user demands may be better satisfied.

Fig. 6 is a block diagram illustrating another device for pushing information according to an exemplary embodiment.

As illustrated in Fig. 6, the device for pushing information may include an information acquisition module 51, an interest parameter determination module 52, and an information push module 53.

Descriptions of Fig. 5 may be referred to for details of the functions of the information acquisition module 51, the interest parameter determination module 52, and the information push module 53.

Besides, the device may further include a framework setup module 54.

The framework setup module 54 is configured to set up Storm real-time streaming distribution processing framework. Storm real-time streaming distribution processing framework is employed in the disclosure, which is more suitable for real-time processing compared with the commonly used distribution processing framework such as hadoop.

The information acquisition module 51 may acquire target information stored locally in a mobile terminal via the Storm real-time streaming distribution processing framework that is set up by the framework setup module 54.

Wherein, the interest parameter determination module 52 may include a duplicate removal sub-module 521 and an interest parameter sub-module 522.

The duplicate removal sub-module 521 is configured to perform duplicate removal on the target information.

The duplicate removal of the embodiment may include removing duplicate contents based on topics of the images, for example, removing the same images or images of little differences. The duplicate removal may lead to reduced amount of information to be processed, so that computational complexity may be reduced and processing speed may be improved.

The interest parameter sub-module 522 is configured to determine an interest parameter based on the duplicate-removed target information.

For example, when the target information is text information, the interest parameter may be determined based on user account information and information of resources accessed by the user that contained in the text information. When the target information is a video, the interest parameter may be determined based on a title, content and viewing time of the video. When the target information is an audio, the interest parameter may be determined based on image recognition such as facial recognition and object recognition, so as to extract information such as gender, age, mood, family members, hobbies, income level and other information of the user and determine the interest parameter based on the extracted information.

Wherein, the information push module 53 may include a storage sub-module 531and a push sub-module 532.

The storage sub-module 531 is configured to store advertisements, application recommendations, and notifications that correspond to the interest parameter.

The push sub-module 532 is configured to transmit to the terminal one or more of an advertisement, an application recommendation, and a notification that correspond to the interest parameter and are stored in the storage sub-module 531.

Fig. 7 is a block diagram illustrating another device for pushing information according to an exemplary embodiment.

The device may be a terminal. As illustrated in Fig. 7, the device for pushing information may include an information acquisition module 71, an interest parameter determination module 72, an interest parameter transmission module 73, and an information reception module 74.

The information acquisition module 71 is configured to acquire locally stored target information.

The interest parameter determination module 72 is configured to determine the interest parameter based on the target information acquired by the information acquisition module 71.

The interest parameter transmission module 73 is configured to transmit the interest parameter determined by the interest parameter determination module 72 to the server, so that push information corresponding to the interest parameter may be acquired by the server.

The information reception module 74 is configured to receive the push information transmitted by the server.

It can be seen from the embodiment that the interest parameter may be determined based on target information stored locally in a terminal, and push information may be transmitted to the server according to the interest parameter determined based on the target information, which is stored locally in the terminal, then the push information that correspond to the interest parameter may be transmitted to the terminal by the server, thereby accuracy and comprehensiveness may be improved with respect to acquiring interest of a user, information may be pushed based on the more accurate and comprehensive user interest, thereby user demands may be better satisfied.

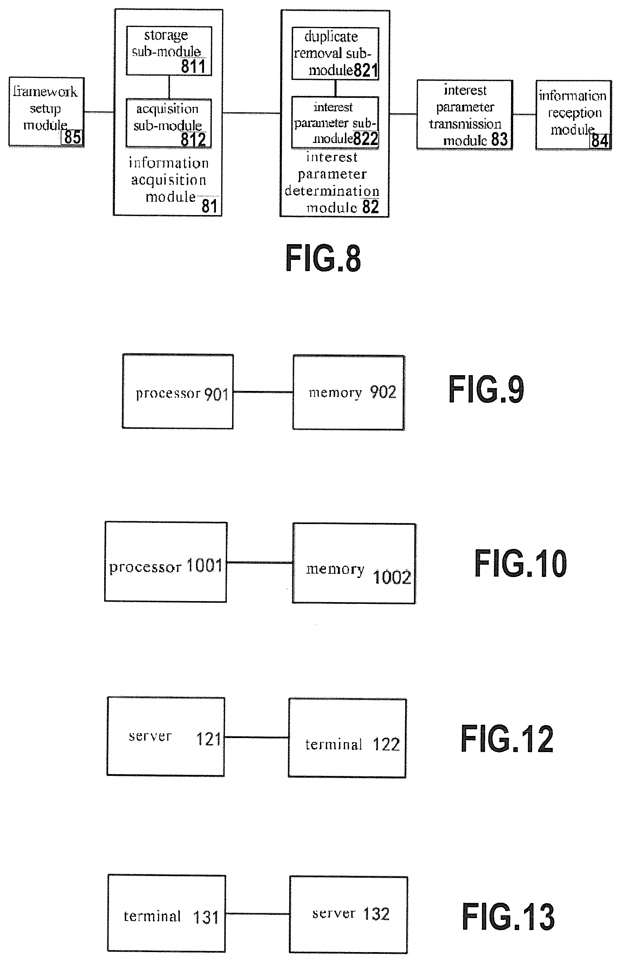

Fig. 8 is a block diagram illustrating another device for pushing information according to an exemplary embodiment.

As illustrated in Fig. 8, the device for pushing information may include an information acquisition module 81, an interest parameter determination module 82, an interest parameter transmission module 83, and an information reception module 84.

Descriptions of Fig. 8 may be referred to for details of the functions of the information acquisition module 81, the interest parameter determination module 82, the interest parameter transmission module 83, and the information reception module 84.

Besides, the device may further include a framework setup module 85.

The information acquisition module 81 may acquire locally stored target information via the Storm real-time streaming distribution processing framework that is set up by the framework setup module 85.

Wherein, the information acquisition module 81 may include a storage sub-module 811 and an acquisition sub-module 812.

The storage sub-module 811 is configured to locally store history operating information of an image, a text, an audio, and a video.

The acquisition sub-module 812 is configured to acquire one or more of image history operating information, text history operating information, audio history operating information, and video history operating information stored locally in the storage sub-module 811.

Wherein, the interest parameter determination module 82 may include a duplicate removal sub-module 821 and an interest parameter sub-module 822.

The duplicate removal sub-module 821 is configured to perform duplicate removal on the target information.

The duplicate removal of the embodiment may include removing duplicate contents based on topics of the images, for example, removing the same images or images of little differences. The duplicate removal may lead to reduced amount of information to be processed, so that computational complexity may be reduced and processing speed may be improved.

The interest parameter sub-module 822 is configured to determine an interest parameter based on the duplicate-removed target information.

For example, when the target information is text information, the interest parameter may be determined based on user account information and information of resources accessed by the user that contained in the text information. When the target information is a video, the interest parameter may be determined based on a title, content and viewing time of the video. When the target information is an audio, the interest parameter may be determined based on image recognition such as facial recognition and object recognition, so as to extract information such as gender, age, mood, family members, hobbies, income level and other information of the user and determine the interest parameter based on the extracted information.

Description of a corresponding step of a method may be referred to for details of the process in which functions and effects of respective modules are realized.

For embodiments of a device, since it substantially corresponds to embodiments of a method, description of a certain part of the method may be referred to for description of a relevant part of the device. The above-described embodiments of a device are for illustrative purposes only, wherein elements described as separate components may or may not be physically separated, and components illustrated as elements may or may not be physical elements (i.e., these components may be located in the same place, or be distributed in several network elements). Part or all of the modules may be selected to realize the purposes of the scheme of this disclosure according to actual needs. Those of ordinary skill in the art may be able to understand and practice the scheme without creative efforts.

Accordingly, a device is provided in the disclosure.

Fig. 9 is a block diagram illustrating a device according to an exemplary embodiment.

As illustrated in Fig. 9, the device may include: a processor 901; and a memory 902 for storing processor-executable instructions; wherein processor is configured to: acquire target information stored locally in a terminal; determine an interest parameter based on the target information; transmit to a terminal push information corresponding to the interest parameter.

It is to be noted that descriptions of the methods may be referred to for other programs stored in the memory 902, which will be no longer explained herein. In addition, the processor 901 is further configured to execute other programs stored in the memory 902.

Fig. 10 is a block diagram illustrating a device according to an exemplary embodiment.

As illustrated in Fig. 10, the device may include: a processor 1001; and a memory 1002 for storing processor-executable instructions; wherein processor is configured to: acquire locally stored target information; determine interest parameters based on the target information; transmit to a server the interest parameter, so that the server is operable to acquire push information corresponding to the interest parameter; receive the push information transmitted by the server.

It is to be noted that descriptions of the methods may be referred to for other programs stored in the memory 1002, which will be no longer explained herein. In addition, the processor 1001 is further configured to execute other programs stored in the memory 1002.

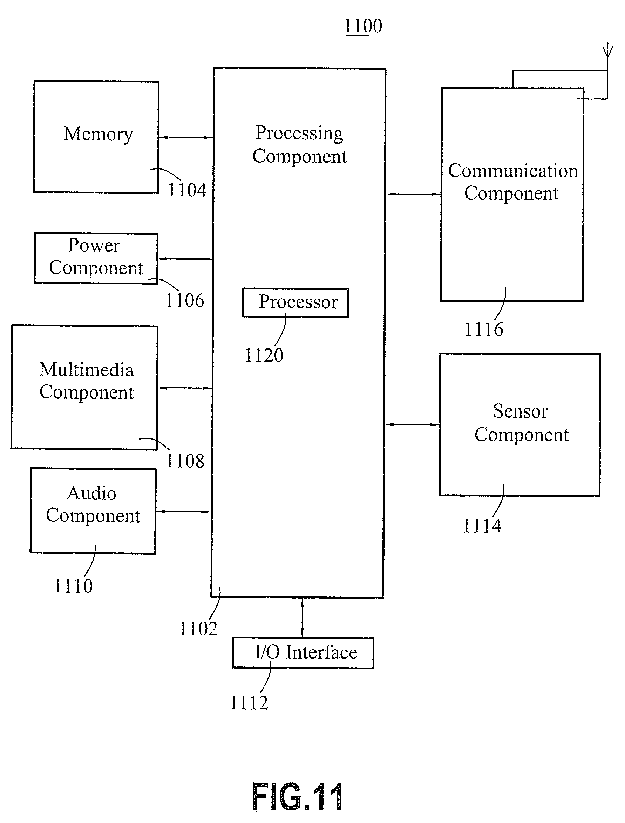

Fig. 11 is a structure block diagram illustrating a device according to an exemplary embodiment. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions which when executed by a processor of a server, cause the server to implement a method for pushing information, including: acquiring target information stored locally in a terminal; determining an interest parameter based on the target information; transmitting to the terminal push information corresponding to the interest parameter.

A non-transitory computer-readable storage medium having stored therein instructions which when executed by a processor of a terminal, cause the terminal to implement a method for pushing information, including: acquiring locally stored target information; determining an interest parameter based on the target information; transmitting to a server the interest parameter, so that the server is operable to acquire push information corresponding to the interest parameter; receiving the push information transmitted by the server.

Fig. 12 is a system block diagram illustrating a device according to an exemplary embodiment.

As illustrated in Fig. 12, a system for pushing information may include a server 121 and a terminal 122.

The server 121 is configured to acquire target information stored locally in a terminal 122, determine an interest parameter based on the target information, and transmit to the terminal 122 push information corresponding to the interest parameter

The terminal 122 is configured to store the target information, and receive the push information that correspond to the interest parameter transmitted by the server 121.

Fig. 13 is a system block diagram illustrating a device according to an exemplary embodiment.

As illustrated in Fig. 13, a system for pushing information may include a terminal 131 and a server 132.

The terminal 131 is configured to acquire locally stored target information, determine an interest parameter based on the target information, transmit the interest parameter to the server 132, and receive push information transmitted by the server 132.

The server 132 is configured to receive the interest parameter transmitted by the terminal, acquire the push information that correspond to the interest parameter based on the interest parameter, and transmit the push information to the terminal 131.

## Claims

1. A method for pushing information, **characterized in** comprising:
acquiring (301) locally stored target information;
determining (302) an interest parameter based on the target information;
transmitting (303) to a server the interest parameter, so that the server is operable to acquire push information corresponding to the interest parameter; and
receiving (304) the push information transmitted by the server.

2. The method of claim 1, wherein the processing of acquiring locally stored target information comprises:
acquiring the locally stored target information via a Storm real-time streaming distribution processing framework.

3. The method of claim 1, wherein the processing of acquiring locally stored target information comprises:
acquiring one or more of image history operating information, text history operating information, audio history operating information, and video history operating information, which are stored locally.

4. The method of any one of claims 1-3, wherein the processing of determining an interest parameter based on the target information comprises:
performing (402) duplicate removal on the target information;
determining (403) the interest parameter based on the duplicate-removed target information.

5. A device for pushing information, **characterized in** comprising:
an information acquisition module (71) configured to acquire locally stored target information;
an interest parameter determination module (72) configured to determine an interest parameter based on the target information acquired by the information acquisition module (71);
an interest parameter transmission module (73) configured to transmit to a server the interest parameter determined by the interest parameter determination module (72), so that push information corresponding to the interest parameter is acquired by the server; and
an information reception module (74) configured to receive the push information transmitted by the server.

6. The device of claim 5, wherein the device further comprises:
a framework setup module (75) configured to set up a Storm real-time streaming distribution processing framework,
wherein the information acquisition module (71) acquires the locally stored target information via the Storm real-time streaming distribution processing framework which is set up by the framework setup module (75).

7. The device of claim 5, wherein the information acquisition module (71) further comprises:
a storage sub-module (811) configured to locally store image history operating information, text history operating information, audio history operating information, and video history operating information; and
an acquisition sub-module (812) configured to acquire one or more of the image history operating information, text history operating information, audio history operating information, and video history operating information stored locally in the storage sub-module (811).

8. The device of any one of claims 5-7, wherein the interest parameter determination module (72) further comprises:
a duplicate removal sub-module (821) configured to perform duplicate removal on the target information; and
an interest parameter sub-module (822) configured to determine an interest parameter based on the duplicate-removed target information.

9. An apparatus for pushing information, comprising:
a processor;
a memory for storing processor-executable instructions;
wherein the processor is configured to:
acquire locally stored target information;
determine an interest parameter based on the target information;
transmit the interest parameter to a server, so that the server is operable to acquire push information corresponding to the interest parameter; and
receive the push information transmitted by the server.

10. A system for pushing information, comprising:
a terminal configured to: acquire locally stored target information, determine an interest parameter based on the target information, transmit the interest parameter to a server, and receive push information transmitted by the server; and
a server configured to: receive the interest parameter transmitted by the terminal, acquire the push information corresponding to the interest parameter based on the interest parameter, and transmit the push information to the terminal.

11. A computer program including instructions for executing the steps of a method for pushing information according to any one of claims 1 to 4 when said program is executed by a computer.

12. A recording medium readable by a computer and having recorded thereon the computer program according to claim 11.
